# EUROPEAN PATENT APPLICATION

(11) **EP 4 722 866 A1**
(43) Date of publication of application: **08.04.2026**
(21) Application number: 24818698.3
(22) Date of filing: 05.06.2024
(51) Int. Cl.: G06F 3/01, G06T 19/00

(54) **ENVIRONMENT MANAGEMENT METHOD FOR THREE-DIMENSIONAL SCENE**

(30) Priority: 05.06.2023 CN 202310659492
(71) Applicant: Beijing Irisview Technology Co., Ltd., Beijing 100083 (CN)
(72) Inventor: YUE, Yating, Beijing 100083 (CN); ZHANG, Chi, Beijing 100083 (CN); FAN, Shunhao, Beijing 100083 (CN)
(74) Representative: IP TRUST SERVICES
(86) International application number: PCT/CN2024/097602
(87) International publication number: WO 2024/251166

(57) **Abstract**

Provided in the present invention is an environment management method for a three-dimensional scene. The method comprises: acquiring environmental information of a scene, wherein the environmental information comprises information of the scene, a user and an application; performing unified format definition on the environmental information; and performing unified distribution management on the environmental information which has been subjected to format definition. The present invention can achieve seamless switching between AR, VR and XR by means of performing unified distribution management on environmental information, and provides the possibility for an application to interact with a scene environment, the other applications and even other users, thereby improving the experience of a user in virtual, real or mixed scenes.

## Description

### CROSS-REFERENCE TO RELATED APPLICATIONS

The present application claims the priority of the Chinese patent application No. 202310659492.4 and entitled "Environment Management Method, Apparatus, Device and Storage Medium for a Three-Dimensional Scene" as filed on June 05, 2023, the entire contents of which are incorporated herein by reference.

### TECHNICAL FIELD

The present disclosure relates to the field of Extended Reality, in particular to an environment management method for a three-dimensional scene.

### BACKGROUND

On XR hardware platforms, with the help of environment recognition capabilities or the construction of purely virtual environments, users can interact with application contents in corresponding environments. Applications can also handle the placement, occlusion and other effects of objects based on environmental information. In currently existing technical solutions, there is no unified mechanism for managing real environmental information and virtual environmental information. Consequently, an application does not have a unified mechanism to obtain the environmental information, resulting in that many XR applications can only normally run in one of a virtual environment, a real environment and a mixed environment. Meanwhile, the current technical solutions are mainly targeted at single-application scenes. In a three-dimensional multi-task scene, it is necessary for the system to perform unified management on both the virtual and real environments, and reasonably distribute information to different parts, enabling interaction between them while ensuring privacy and security. In multi-task scenes, the impact and modification of an application to the environment also need to be transferred to other applications by means of a corresponding mechanism.

The environment here includes not only the scene content, but also the user (which may be one or more users) and the application (which may be multiple two-dimensional or three-dimensional applications). The interaction between a user and a three-dimensional scene, the interaction between a user and an application, the interaction between users, the interaction between applications, and the interaction between an application and a three-dimensional scene all need to be managed in a unified manner.

Therefore, there is a need for an environment management method for a three-dimensional scene that can uniformly manage the environment of a three-dimensional scene to improve user experience in virtual, real or mixed scenes.

### SUMMARY

An object of the embodiments of the present disclosure is to provide an environment management method for a three-dimensional scene, which, with a unified format, defines relevant information of "scene", "application" and "user" as environmental information, and achieves seamless switching between AR, VR and XR by performing unified distribution management on the environmental information, and provides the possibility for the application to interact with a scene environment, other applications and even other users, thereby improving the experience of a user in virtual, real or mixed scenes.

In one aspect, the present disclosure provides an environment management method for a three-dimensional scene, executed by a system side, comprising:
acquiring environmental information of a scene, wherein the environmental information includes information of the scene, a user and an application;
performing a unified format definition on the environmental information; and
performing unified distribution management on the environmental information that has been subjected to the format definition.

In another aspect, the present disclosure provides an environment management method for a three-dimensional scene, executed by an application side, comprising:
acquiring environmental information that has been subjected to format definition distributed by a system side; and
based on the environmental information that has been subjected to format definition, executing an application logic.

From the above-mentioned technical solutions provided by the embodiments of the present disclosure, it can be seen that in the embodiments of the present disclosure, the user and the application are both located in the scene; the environmental information within a scene or between scenes includes scene information, user information and application information. Through a change in any one of the user, the scene and the application or interactions among multiple of the scene, the user and the application, environment change information is generated, which acts on the environmental information to cause a change to the environmental information, and the environmental information that has been changed is loaded to render the environment content, thereby improving the experience of a user in virtual, real and mixed scenes.

To make the above-mentioned and other purposes, features and advantages of the present disclosure more obvious and understandable, detailed explanations of preferred embodiments are specifically given below with reference to the figures.

### BRIEF DESCRIPTION OF DRAWINGS

In order to more clearly illustrate the technical solutions in the embodiments of the present disclosure or in the prior art, the drawings required for describing the embodiments or the prior art will be briefly introduced below. Obviously, the figures described below are only some embodiments of the present disclosure. For a person of ordinary skill in the art, other figures may also be obtained based on these figures without paying creative effort.
FIG. 1 shows a flowchart of an environment management method for a three-dimensional scene as provided in an embodiment of the present disclosure;
FIG. 2 shows a flowchart of generating corresponding display-type environment change information for the scene, the application and/or other users based on the user's operation on the scene and/or the application as provided in an embodiment of the present disclosure;
FIG. 3 shows a flowchart of generating corresponding placement-type environment change information for the scene and the application based on the user's operation on the scene and/or the application as provided in an embodiment of the present disclosure;
FIG. 4 shows a flowchart of generating activity-type environment change information for the scene, the application and/or the user based on a position of the object in the scene space and/or the application;
FIG. 5 shows a flowchart of generating status-type environment change information for the user, the object in the scene space and/or the application based on a current status of the object in the scene space and/or the application;
FIG. 6 shows a schematic diagram of a module structure of an environment management device for a three-dimensional scene as provided in an embodiment of the present disclosure;
FIG. 7 shows a schematic diagram of a module structure of another environment management device for a three-dimensional scene as provided in an embodiment of the present disclosure;
FIG. 8 shows a structural diagram of a computer device as provided in an embodiment of the present disclosure.

Explanation of the reference signs:
100. System;
101. Acquisition unit;
102. Processing unit;
103. Distribution unit;
200. Application;
201. Reception unit;
202. Execution unit;
802. Computer device;
804. Processor;
806. Memory;
808. Driving mechanism;
810. Input/output module;
812. Input device;
814. Output device;
816. Presentation device;
818. Graphical user interface;
820. Internet interface;
822. Communication link;
824. Communication bus.

### DESCRIPTION OF EMBODIMENTS

The technical solutions in the embodiments of the present disclosurewill be described clearly and completely below with reference to the accompanying drawings in the embodiments of the present disclosure. Obviously, the embodiments described here are only part of, rather than all of the embodiments of the present disclosure. Based on the embodiments of the present disclosure, all other embodiments obtained by the persons with ordinary skills in the art without paying any creative effort should fall within the scope of protection of the embodiments of the present disclosure.

On XR glasses platforms, with the help of environment recognition capabilities or the construction of purely virtual environments, users are enabled to interact with application contents in corresponding environments. When an immersive application occupies the entire space, the application can handle the placement, occlusion and other effects of an object based on the environmental information. In a three-dimensional multi-task scene that simultaneously supports a virtual, a real, or a mixed environment, it is necessary for the system to perform unified management on both the virtual and real environments and reasonably distribute information to different parts, enabling interaction between them while ensuring privacy and security.

The environment here includes not only the scene, but also the user (which may be one or more users) and the application (which may be multiple two-dimensional or three-dimensional applications). The interaction between a user and a three-dimensional scene, the interaction between a user and an application, the interaction between users, the interaction between applications and the interaction between an application and a three-dimensional scene all need to be managed in a unified manner.

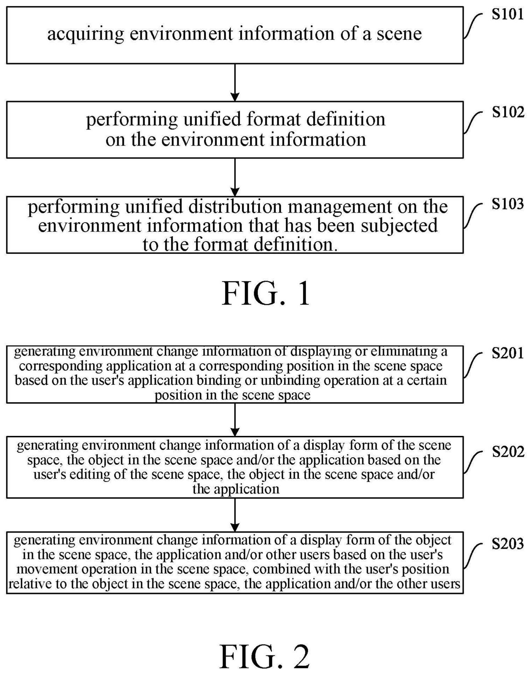

To address the above-mentioned problem, the embodiments of the present disclosure provide an environment management method for a three-dimensional scene. FIG. 1 shows a flowchart of an environment management method for a three-dimensional scene as provided in an embodiment of the present disclosure. The present disclosure provides the method operation steps as described in the embodiments or flowcharts, but more or fewer operation steps may be included based on conventional or non-creative efforts. The sequence of steps mentioned in the embodiments is merely one of a plurality of step execution sequences and does not represent a unique execution sequence. When the steps are executed by a system or device product in practice, they may be executed sequentially or in parallel in accordance with the method shown in the embodiments or the figures.

It should be noted that the terms "first", "second", etc. in the Description, the claims and the figures of the present disclosure are intended to distinguish similar objects, rather than to describe a particular sequence or order. It should be understood that the data used in this way can be interchanged where appropriate, so that the embodiments of the present disclosure described herein can be implemented in an order other than those illustrated or described herein. Furthermore, the terms "comprise", and "have" and any variations thereof are intended to cover non-exclusive inclusions, for example, processes, methods, devices, products or equipment that include a series of steps or units do not have to be limited to those steps of units clearly listed, but may include other steps or units that are not clearly listed or are inherent to these processes, methods, products or equipment.

Referring to FIG. 1, an embodiment of the present disclosure provides an environment management method for a three-dimensional scene, executed by a system side, comprising:
S101: acquiring environmental information of a scene;
S102: performing a unified format definition on the environmental information;
S103: performing unified distribution management on the environmental information that has been subjected to the format definition.

The scene includes an augmented reality scene, a virtual reality scene or a mixed reality scene, the scene may be a single scene, but of course it is also possible to switch between two or three scenes.

An environment management method for a three-dimensional scene, executed by an application side, comprising:
acquiring environmental information that has been subjected to format definition distributed by a system side; and
executing an application logic based on the environmental information that has been subjected to format definition.

A user may enter a corresponding scene by means of an application. Taking a room scene as an example. The scene includes a scene space and an object in the scene space. For example, the furnishings in the room are all objects in the scene space, that is, they are part of the room scene. In a scene, an application may be additionally added according to the use requirements, and other users also may be invited to join (share) the current scene according to the user requirements. The environmental information involves three aspects of environmental information, namely, scene information, user information, and application information.

The scene information includes geometrical information, center point coordinate information, plane/curved surface information, and object information in the scene space. For example, the scene may be a cubic scene with a center point coordinate at P(0,0,0) and an edge length of 2m, in which there are: A) a plane in the cubic scene that has been identified by an algorithm, B) a curved surface that has been calibrated although not successfully identified by an algorithm, and C) a table in the cubic scene.

The object information in the scene space may include geometrical information, such as size, shape, etc., position information and rotation information of an object, which rotation information refers to, for example, an angle at which the object deviates from the center point coordinate of the scene, an orientation of the object, etc., and may also include semantic information, which represents a type of the object, such as whether it is a cup or a table, and for another example, the amount and temperature of the water in the cup are also information.

The user information includes identity information, position information and rotation information. The identity information is the information that can be made public as set by the user, such as the nickname and three-dimensional avatar of the user. The position information includes the positions of the user's body parts such as the head, hands, eyes, etc. The rotation information is, for example, an angle at which the user deviates from the center point coordinate of the scene, an orientation of the user, etc.

The application information is presented in the form of a bounding box, and includes bounding box information and status parameter information, providing geometrical information, coordinate information and rotation information. The status parameter information includes illumination parameters, light intensities, illumination types, etc. For users other than specified ones, including applications, only the information provided by the bounding box can be acquired, thereby preventing the user's private data from being leaked.

The performing of a unified format definition on the environmental information is to respectively perform the unified format definition on the scene information corresponding to a plurality of scenes, user information corresponding to a plurality of users, and application information corresponding to a plurality of applications.

The performing of unified distribution management on the environmental information that has been subjected to the format definition specifically refers to distributing the environmental information that has been subjected to the format definition to the corresponding scene, user and application. To be specific, the unified format definition refers to: defining the scene, user and application into corresponding environmental information using the same information format, comprising:
defining a unified environmental information format, comprising position, rotation, size, shape (geometrical information), status parameter information, semantic information, etc.;
converting the relevant information of the scene and user, as well as the information related to environment within the application, into the unified environmental information format for unified management.

The environment management method for a three-dimensional scene, executed by a system side, further comprises: distributing, to a corresponding application, permission information for other applications and/or scenes, wherein the permission information comprises a read-only permission and a modification permission; if the permission information is the read-only permission, the corresponding application is not allowed to modify information of corresponding scenes and/or other applications, and if the permission information is the modification permission, the corresponding application is allowed to modify information of scenes and/or other applications.

The environment management method for a three-dimensional scene, executed by an application side, further comprises: receiving permission information for other applications and/or scenes sent by a system side, wherein the permission information includes a read-only permission and a modification permission;
if the permission information is the read-only permission, it is not allowed to modify the information of a corresponding scene and/or other applications; and
if the permission information is the modification permission, it is allowed to modify the information of scenes and/or other applications.

After the environmental information has been changed (which may specifically be a change in any one or more of the scene information, user information and application information), the changed information is distributed and synchronized to the corresponding scene, user and application, so that the scene information of the corresponding scene, user information of the corresponding user and application information of the corresponding application are changed.

The scene, the user, and the application can interact freely without barriers. That is, interactions can occur between a user and a scene, between a user and an application, between users, between applications, between an application and a scene, and between scenes. Furthermore, when these interactions generate environment change information, the environmental information is updated according to the environment change information.

After a user enters a scene, the scene where the current user is located is identified, and the position and orientation of the user are determined (if the scene is a virtual scene, the position of the current user is used for positioning, and the virtual scene is loaded). Acquisition of user information in real time begins. If other users join, realizing a shared space, the environment-related information of the other users that is sent will also be received in real time. If the current scene is a scene that the current user has previously stored, all the contents of the copy of this scene are loaded, including, but not limited to, the scene environment and applications bound in the scene.

The generating of environment change information according to a change in at least one of the scene, the user and the application or interactions among multiple of the scene, the user and the application further includes:
generating corresponding display-type environment change information and/or placement-type environment change information for the scene, the application and/or other users based on the user's operation on the scene and/or the application;
   and/or
generating corresponding movement-type environment change information for the scene, the application and/or other users based on the user's position change within the scene and/or between scenes;
   and/or
generating corresponding status-type environment change information for the user, the object in the scene space and/or the application based on a current status of the object in the scene space and/or the application;
   and/or
generating corresponding activity-type environment change information for the scene, the application and/or the user based on a position of the object in the scene space and/or the application.

The user may perform an operation on the scene or the application. After the operation, the corresponding scene, application and other users will generate display-type environment change information, which will cause a change in terms of display to the scene, the application and the other users.

What needs to be explained is that, referring to FIG. 2, the generating of corresponding display-type environment change information for the scene, the application and/or other users based on the user's operation on the scene and/or the application further includes:
S201: generating environment change information of displaying or eliminating a corresponding application at a corresponding position in the scene space based on the user's application-binding or application-unbinding operation at a certain position in the scene space;
S202: generating environment change information of a display form of the scene space, the object in the scene space and/or the application based on the user's editing of the scene space, the object in the scene space and/or the application; and
S203: generating environment change information of a display form of the object in the scene space, the application and/or other users based on the user's movement operation in the scene space, combined with the user's position relative to the object in the scene space, the application and/or the other users.

The user information includes the positions of the user's head, hands, eyes and other body parts that have been subjected to unified format definition. The user may bind or unbind an application at a certain position in the scene. For example, the user may bind an application A at a certain position in the scene, the bounding box of application A is a puppy, and the information of the puppy includes its size, shape, position, orientation, etc. that have been subjected to unified format definition. A plurality of different applications may be bound to the same position, and one application may also be bound to different positions. Unbinding is the opposite method of binding with the same concept, which will not be elaborated here.

The user can edit the scene space, the object within the scene space and/or the application. For example, the object in the scene space is a table, and the information of the table includes its size, shape, position, orientation, etc. The user can increase the size of the table in the scene or edit the table top from a plane to a curved surface, and the corresponding operation will generate corresponding environment change information for the table. The user can also edit the scene space, such as adding an object chair in the scene space. According to the user's editing operation, environment change information will be generated, comprising the size, position, shape, orientation, etc. of the chair. Similarly, the user can also delete the chair from the current scene.

The user also can move in the scene. For example, based on the user's current position and the position of an application, a distance is calculated. When the distance between the user's position and the application's position is less than a preset value and this position has bound multiple applications, icons of all the applications bound at this position are displayed in an expanded manner, while when the distance is not less than the preset value, only an effect of one or more icons stacked is displayed, to avoid excessive information display interfering with the user's interaction. The occlusion relationship between various applications or objects need to be displayed correctly. For example, if the puppy is behind the sofa in the scene, the puppy is occluded by the sofa and should not be rendered. Similarly, when the distance to other users in the same scene is far, only the general contours of the other users in the scene are displayed, but when the distance is close, the specific facial features of them may be displayed.

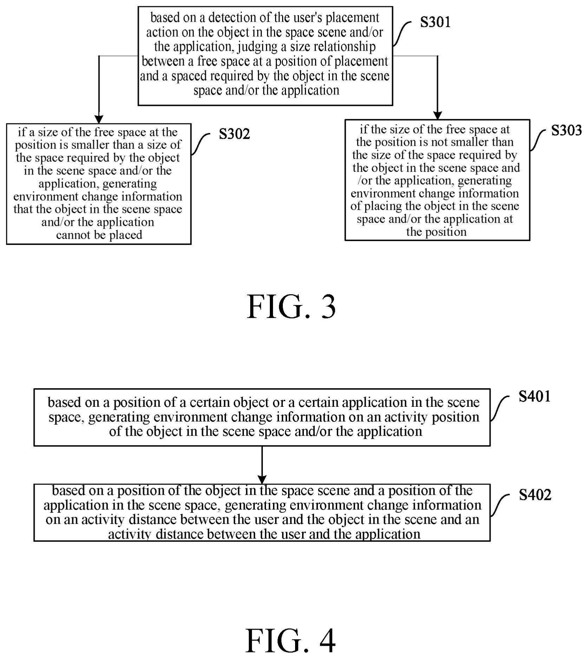

In addition, referring to FIG. 3, the generating of corresponding placement-type environment change information for the scene(s) and the application(s) based on the user's operation on the scene and/or the application further includes:
S301: based on a detection of the user's placement action on the object in the scene space and/or the application, judging a size relationship between a free space at a position of placement and a space required by the object in the scene space and/or the application;
S302: if a size of the free space at the position is smaller than a size of the space required by the object in the scene space and/or the application, generating environment change information that the object in the scene space and/or the application cannot be placed;
S303: if the size of the free space at the position is not smaller than the size of the space required by the object in the scene space and/or the application, generating environment change information of placing the object in the scene space and/or the application at the position.

For example, if the user wants to place an application box in an application drawer, the information of the drawer application includes the size, shape, position, etc. of the drawer that have been subjected to unified format definition, and the information of the box application includes the size, shape, position, etc. of the box that have been subjected to unified format definition. After detecting the user's placement action, it is necessary to judge the size relationship between the free space in the drawer and the space required by the box. If there is enough free space in the drawer, the box can be placed in the drawer, and corresponding environment change information is generated; but if the free space in the drawer is insufficient, the box cannot be placed, and corresponding environment change information is generated. It should be noted that the space and size mentioned in the present disclosure not only refer to the three-dimensional space and size, but may also refer to the two-dimensional planar space and size. For example, if the user wants to hang a picture on the wall, the space on the wall refers to the plane corresponding to the placement action, and the size relationship refers to the size relationship between the picture and the plane where it is placed. The corresponding environment change information is generated according to whether it is possible to place the corresponding object and/or application.

In an embodiment of the present disclosure, the generating of corresponding movement-type environment change information for the scene, the application and/or other users based on the user's position change within the scene and/or between scenes further includes:
based on the user's position change or the user's visual focus in the scene space, generating environment change information of moving the object in the scene space and/or the application.

What needs to be explained is that in the present disclosure, the positional change of the user in the scene not only refers to the user's position change as a whole, but may also refer to a change of a position of a body part of the user or the user's position change's visual focus. The user information includes the positions of the user's head, hands, eyes and other body parts that have been subjected to unified format definition. For example, the puppy of application A is running around the user, the application information of the puppy includes the size, shape, position, orientation, etc. of the puppy that have been subjected to unified format definition. When the position of the user changes, via the corresponding environment change information, the puppy moves its position and continues to run around the user. For another example, the puppy of application A is configured such that the puppy runs to the position where the user's visual focus locates. When the position of the user's visual focus changes, the environment change information of changing the position of the puppy is generated, so that the puppy runs to the position of the user's visual focus.

In an embodiment of the present disclosure, referring to FIG. 4, the generating of activity-type environment change information for the scene, the application and/or the user based on a position of the object in the scene space and/or the application includes:
S401: based on a position of a certain object or a certain application in the scene space, generating environment change information of an activity position of the object in the scene space and/or the application;
S402: based on a position of the object in the space scene and a position of the application in the scene space, generating environment change information of an activity distance between the user and the object in the scene and an activity distance between the user and the application.

For the butterfly of application B, the application information includes the butterfly's size, shape, position, orientation, etc. that have been subjected to unified format definition. By default, the butterfly flies along a random path in the air. At regular intervals, it is detected whether there are any objects or other applications nearby. If there are, the butterfly will dock on the corresponding objects or other applications for a period of time and then fly again. If there is an object C (a table), at the position M in the scene, and the object information corresponding to the table includes the table's size, shape, position, orientation, etc. that have been subjected to unified format definition, the existence of the table will affect the activity position of the butterfly, and the corresponding environment change information will be generated.

In addition, if there is an object D (a wall), at the position M in the scene, the object information corresponding to the wall includes the wall's size, shape, position, etc. that have been subjected to unified format definition, and the user cannot pass through the wall, then, based on the position of the wall, an activity distance of 0.5 meters or more between the user and the wall is generated, that is, the distance between the user and the wall is maintained at 0.5 meters or more to ensure that the user can move around normally.

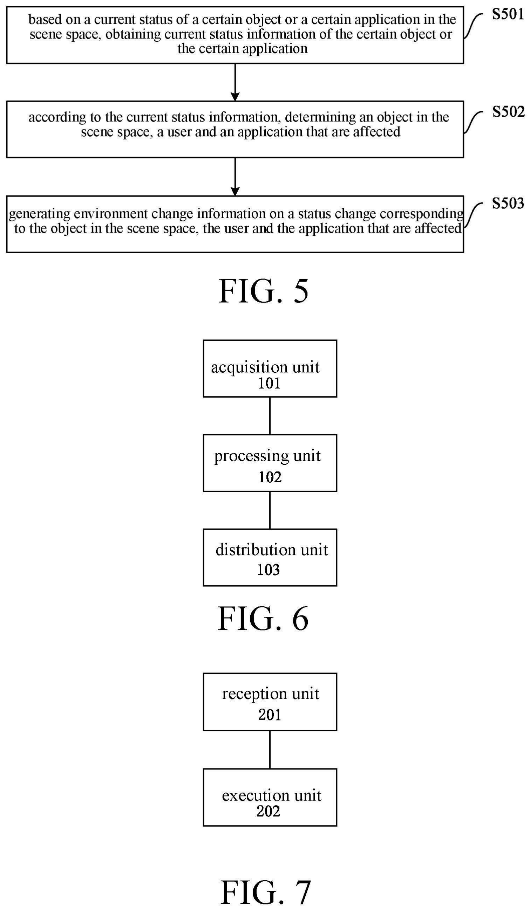

In an embodiment of the present disclosure, referring to FIG. 5, the generating of corresponding status-type environment change information for the user, the object in the scene space and/or the application based on a current status of the object in the scene space and/or the application further includes:
S501: based on a current status of a certain object or a certain application in the scene space, obtaining current status information of the certain object or the certain application;
S502: according to the current status information, determining an object in the scene space, a user and an application that are affected; and
S503: generating environment change information of a status change corresponding to the object in the scene space, the user and the application that are affected.

For example, there is the sun of application E in the scene, and the application information includes its position, illumination parameters, illumination intensity, illumination type, etc. that have been subjected to unified format definition. The sun follows the logic of rising in the east and setting in the west, and its illuminating angle varies at different times. The current status information of the sun includes the current light source position, brightness, illumination range, attenuation speed, etc. Based on these, it is possible to determine the affected object in the scene space, such as the sunflower of application F in the scene. The application information is presented in the form of a bounding box. The bounding box information includes its size, shape, position, etc. The sunflower would be affected by the sun of application E, but a curtain in the scene may not be affected by it. Whether something is affected is generally determined based on the illumination range of the sun and the category of the application or object. If it is not within the illumination range, it generally will not be affected. If it is within the illumination range but belongs to a categories such as curtains, it will not undergo changes due to different light and thus will not be affected. The affected objects, users and applications will undergo a status change, which may refer to multiple aspects. For example, the brightness affects the light and shade on the user's face, and the position of the light source affects the orientation of the sunflower, thereby generating the corresponding environment change information for the status change.

The environmental information in the embodiments of the present disclosure, as a global concept, can be shared by multiple objects, multiple applications and multiple users in multiple scenes. Also, the objects, applications and users all can perform actions to modify the environmental information. Meanwhile, such changes will be synchronized to all the parties. All the parties can perceive the generated corresponding environment change information and then load the changed environmental information to render the environmental content.

The following provides an overall description of the solution of the present disclosure by means of the example of the butterfly docking.

The butterfly docks on the user's hand for a certain period of time, and then docks on a big tree for a certain period of time, and during flight, it bypasses a house. A lamp in front of the door of the house emits light, which affects the light and shade effect of the butterfly.

The scene includes a butterfly of application X, a house of application Y, the lamp in front of the door of the house of application Z, an object T, i.e., the big tree, and the user U. Applications X, Y and Z will upload their respective application information that has been subjected to unified format definition to the system. For example, the geometrical information, coordinate information and rotation information of the butterfly are all uploaded to the system. The information of the house is presented in the form of a bounding box that includes its geometrical information (if the application does not want to expose the specific content of the house to other applications, it may only synchronize the bounding box information), coordinate information, rotation information, etc., all of which are uploaded to the system. The geometrical information, coordinate information and status information (illumination parameters, illumination intensity, illumination type, etc.) of the lamp are all uploaded to the system.

According to the geometrical information, coordinate information and rotation information of the big tree in the scene information, the size, shape, position and orientation of the big tree are determined. The information of the user U includes the positions of the user's head, hands, eyes and other body parts.

Unified format definition is performed on the above environmental information, and unified distribution management is performed on the environmental information that has been subjected to the format definition.

As the user U walks, the position of the user U in the scene is changed. The positions of the user U's head, hands, eyes and other body parts in the user information that has been subjected to unified format definition are acquired. Since the user U walks, the information of the user U is changed, and environment change information is generated. The environment change information is integrated and then distributed to all the applications X, Y and Z. At this point, the butterfly of application X can determine the position of the user U's hand according to the received environment change information, and dock on the user U's hand, whose position has changed for a certain period of time. Then, it docks on the object T, i.e., the big tree, whose position has not changed for a certain period of time. During flight, the butterfly bypasses the house of application Y, and changes its own light and shade effect when passing by the lamp in front of the door of the house of application Z according to the illumination parameters, illumination intensity, illumination type, etc.

It should be noted that the user information (including but not limited to user device information, user personal information, etc.) and data (including but not limited to data used for analysis, stored data, displayed data, etc.) involved in the present application are all information and data that have been authorized by the user or fully authorized by all the parties. The data acquisition, storage, use, processing, etc. described in the technical solutions described in the embodiments of the present application all comply with the relevant provisions of the national laws and regulations.

Based on the environment management method for a three-dimensional scene as described above, the embodiments of the present disclosure also correspondingly provide an environment management device for a three-dimensional scene. The device may include a system (including a distributed system) using the method described in the embodiments of the present disclosure, software (applications), modules, components, a server, a client, etc., together with a necessary device to implement the hardware. Based on the same innovative concept, the device in one or more embodiments as provided in the embodiments of the present disclosure is described in the following embodiment. Since the scheme of implementation of the device to solve the problem is similar to that of the method, for the specific implementation of the device in the embodiments of the present disclosure, reference can be made to the implementation of the method, and no further elaboration will be given for the repetitive parts. The terms "unit" or "module" used hereinafter refer to a combination of software and/or hardware that can achieve predetermined functions. Although the device described in the following embodiment is preferably implemented in software, the implementation in hardware, or in a combination of software and hardware, is also possible and conceivable.

Specifically, FIG. 6 is a schematic diagram of a module structure in one embodiment of an environment management device for a three-dimensional scene as provided in the embodiments of the present disclosure. Referring to FIG. 6, the environment management device for a three-dimensional scene as provided in the embodiments of the present disclosure comprises: an acquisition unit, a processing unit, and a distribution unit;
an acquisition unit 101, for acquiring environmental information within a scene or between scenes;
a processing unit 102, for generating environment change information based on an interaction between any one or more of a scene, a user and an application, wherein the user and the application are both located in the scene;
a distribution unit 103, for changing the environmental information according to the environment change information.

FIG. 7 is a schematic diagram of a module structure in one embodiment of an environment management device for a three-dimensional scene as provided in the embodiments of the present disclosure. Referring to FIG. 7, the environment management device for a three-dimensional scene as provided in the embodiments of the present disclosure comprises: a reception unit and an execution unit;
a reception unit 201, for acquiring environmental information that has been subjected to format definition distributed by a system side; and
an execution unit 202, for executing an application logic based on the environmental information that has been subjected to format definition.

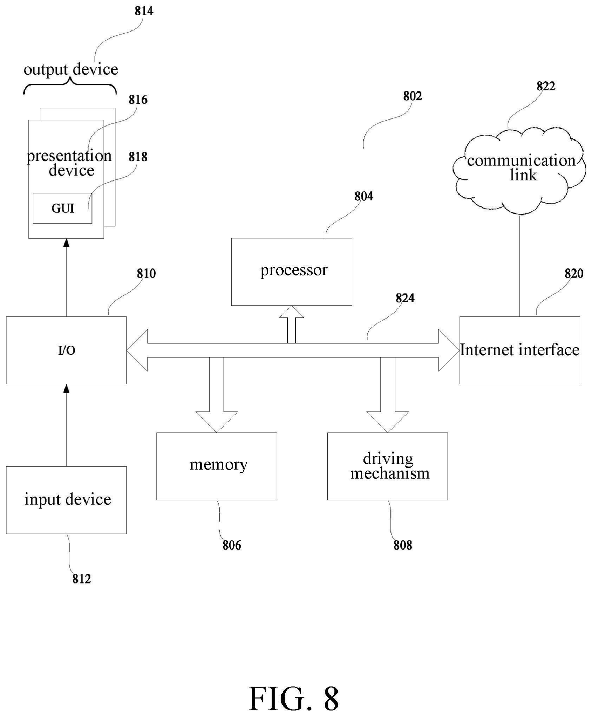

Referring to FIG. 8, based on the the aforementioned environment management method for a three-dimensional scene, an embodiment of the present disclosure further provides a computer device 802, wherein the method runs on the computer device 802. The computer device 802 may comprise one or more processors 804, such as one or more central processing units (CPU) or graphics processing units 30 (GPU), each of which can implement one or more hardware threads. The computer device 802 may also comprise a memory 806 of any type, for storing any type of information such as codes, settings, data, and the like. In a specific embodiment, a computer program is stored on the memory 806 and capable of running on the processor 804. Upon execution of the computer program by the processor 804, instructions of the above-mentioned method can be executed. In a non-limiting manner, for example, the memory 806 may include any one or a combination of more of the following: any type of RAM, any type of ROM, flash memory devices, hard disks, optical discs, etc. More generally, any memory can use any technology to store information. Further, any memory can provide volatile or non-volatile retention of information. Further, any memory can represent a fixed or removable part of the computer device 802. In one case, when the processor 804 executes associated instructions stored in any memory or combination of memories, the computer device 802 can perform any operation of the associated instructions. The computer device 802 also includes one or more driving mechanisms 808 for interacting with any memory, such as hard disk driving mechanisms, optical disc driving mechanisms, etc.

The computer device 802 may also include an input/output module 810 (I/O), which is used to receive various inputs (via an input device 812) and to provide various outputs (via an output device 814). A specific output mechanism may include a presentation device 816 and an associated graphical user interface 818 (GUI). In other embodiments, it may not include the input/output module 810 (I/O), the input device 812 and the output device 814, but be used only as a computer device in the network. The computer device 802 may also include one or more network interfaces 820, which are used to exchange data with other devices via one or more communication links 822. One or more communication buses 824 couple the above-described components together.

The communication link 822 may be implemented in any way, such as through a local area network, a wide area network (e.g., the Internet), point-to-point connection, or any combination thereof. The communication link 822 may include any combination of a hardwired link, a wireless link, a router, a gateway function, a name server, etc. dominated by any protocol or combination of protocols.

Corresponding to the method in FIGS. 1-5, an embodiment of the present disclosure further provides a computer readable storage medium on which a computer program is stored, and upon execution of the computer program by a processor, the steps of the above-described method are performed.

An embodiment of the present disclosure also provides a computer readable instruction, wherein when a processor executes the instruction, a program therein causes the processor to perform the method shown in FIGS. 1-5.

It should be understood that in the various embodiments of the present disclosure, the values of the serial numbers of the processes do not imply the order of execution. The execution order of the processes should be determined by their functions and internal logic, and should not constitute any limitation on the implementation process of the embodiments of the present disclosure.

It should also be understood that in the embodiments of the present disclosure, the term "and/or" merely describes an association relationship between associated objects, indicating that there can be three types of relationships. For example, "A and/or B" can represent three situations: A exists alone, A and B exist simultaneously, and B exists alone. In addition, in the embodiments of the present disclosure, the character "/" generally indicates that the associated objects are in an "or" relationship.

A person of ordinary skill in the art may appreciate that, the units and algorithm steps of each example described in the embodiments disclosed in the present disclosure can be implemented by electronic hardware, computer software, or a combination of both. To clearly illustrate the interchangeability between hardware and software, the composition and steps of each example have been generally described in the above descriptions according to their functions. Whether these functions are executed in the form of hardware or software depends on the specific application and design constraints of the technical solution. Professional technical persons may use different methods for each specific application to achieve the described function, but such implementation should not be regarded as exceeding the scope of the embodiments of the present disclosure.

Persons skilled in the art can clearly understand that, for the convenience and conciseness of description, the specific working processes of the systems, devices and units described above can refer to the corresponding processes in the above-described method embodiments, and no more elaboration will be given here.

In the several embodiments provided in this Description, it should be understood that the systems, devices and methods disclosed can be realized through other means. For example, the device embodiments described above are merely illustrative. For example, the division of the units is only a logical function division. In actual implementation, there can be other division methods, for example, a plurality of units or components can be combined or integrated into another system, or some features can be ignored or not executed. In addition, the coupling or direct coupling or communication connection between each other as shown or discussed can be indirect coupling or communication connection through some interfaces, devices or units, or can be electrical, mechanical or other forms of connection.

The units described as separate components may or may not be physically separated, and the components displayed as units may or may not be physical units, that is, they may be located in one place, or be distributed to a plurality of network units. Some or all of the units can be selected according to actual needs to achieve the purpose of the embodiments of the present disclosure.

In addition, the functional units in each embodiment of the present disclosure can be integrated into a processing unit, or each unit can exist physically separately, or two or more units can be integrated into one unit. The integrated units can be implemented either in the form of hardware or in the form of software functional units.

If the integrated units are implemented in the form of software functional units and sold or used as an independent product, they can be stored in a computer-readable storage medium. Based on such understanding, the technical solution of the embodiments of the present disclosure in essence, or the part of it that contributes to the prior art, or all or part of the technical solution, can be reflected in the form of a software product. The computer software product is stored in a storage medium and includes several instructions to enable a computer device (which may be a personal computer, a server, or a network device, etc.) to perform all or part of the steps of the method described in the embodiments of the present disclosure. The above-mentioned storage medium includes: USB flash drives, portable hard disks, read-only memory (ROM), Random Access Memory (RAM), magnetic disks or optical discs, and various other media that can store program codes.

The present disclosure applies specific embodiments to elaborate on the principles and implementation methods of the embodiments of the present disclosure. The above descriptions of the embodiments are only used to help understand the method of the embodiments and the core ideas of it. Meanwhile, for persons with ordinary skills in the art, based on the idea of the embodiments of the present disclosure, there will be changes in the specific implementation methods and application scope. In conclusion, the content of the present disclosure should not be understood as a limitation of the embodiments of the present disclosure.

## Claims

1. An environment management method for a three-dimensional scene, wherein the environment management method is executed by a system side and comprises:
acquiring environmental information of a scene, wherein the environmental information comprises information of the scene, a user and an application;
performing a unified format definition on the environmental information; and
performing unified distribution management on the environmental information that has been subjected to the format definition.

2. The environment management method for a three-dimensional scene according to claim 1, wherein the scene comprises at least one of an augmented reality scene, a virtual reality scene or a mixed reality scene.

3. The environment management method for a three-dimensional scene according to claim 1, further comprising:
distributing, to a corresponding application, permission information for other applications and/or scenes, wherein the permission information comprises a read-only permission and a modification permission; if the permission information is the read-only permission, the corresponding application is not allowed to modify information of corresponding scenes and/or other applications, if the permission information is the modification permission, the corresponding application is allowed to modify the information of scenes and/or other applications .

4. The environment management method for a three-dimensional scene according to any one of claims 1-3, wherein the method further comprises:
generating environmental change information according to a change in at least one of the scene, the user and the application or interactions among multiple of the scene, the user and the application, wherein the user and the application are both located in the scene; and
updating the environmental information based on the environmental change information.

5. The environment management method for a three-dimensional scene according to claim 4, wherein the scene comprises a scene space and an object within the scene space;
the generating of environment change information according to a change in at least one of the scene, the user and the application or interactions among multiple of the scene, the user and the application further comprises:
generating corresponding display-type environmental change information and/or placement-type environmental change information for the scene, the application and/or other users based on the user's operation on the scene and/or the application;
and/or
generating corresponding movement-type environmental change information for the scene, the application and/or other users based on the user's position change within the scene and/or between scenes;
and/or
generating corresponding status-type environmental change information for the user, the object in the scene space and/or the application based on a current status of the object and/or the application within the scene space;
and/or
generating corresponding activity-type environmental change information for the scene, the application and/or the user based on a position of the object and/or the application within the scene space.

6. The environment management method for a three-dimensional scene according to claim 5, wherein the generating of corresponding display-type environmental change information for the scene, the application and/or other users based on the user's operation on the scene and/or the application further comprises:
generating environment change information of displaying or eliminating a corresponding application at a corresponding position in the scene space based on the user's application-binding or application-unbinding operation at a certain position in the scene space;
generating environmental change information of a display form of the scene space, the object within the scene space and/or the application based on the user's editing of the scene space, the object within the scene space and/or the application; and
generating environmental change information of a display form of the object, the application and/or other users within the scene space based on the user's movement operation in the scene space, combined with the position relative to the object, the application and/or the other users within the scene space.

7. The environment management method for a three-dimensional scene according to claim 5, wherein the generating of corresponding placement-type environmental change information for the scene and the application based on the user's operation on the scene and/or the application further comprises:
based on a detection of the user's placement action of the object and/or the application within the space scene, judging a size relationship between a free space at a position of placement and a space required by the object and/or the application within the scene space;
if a size of the free space at the position is smaller than a size of the space required by the object and/or the application within the scene space, generating environmental change information that the object and/or the application within the scene space cannot be placed; and
if the size of the free space at the position is not smaller than the size of the space required by the object and/or the application within the scene space, generating environmental change information of placing the object and/or the application within the scene space at the position.

8. The environment management method for a three-dimensional scene according to claim 5, wherein the generating of corresponding movement-type environment change information for the scene, the application and/or other users based on the user's position change within the scene and/or between scenes further comprises:
based on the user's position change or the user's visual focus in the scene space, generating environmental change information of moving the object in the scene space and/or the application.

9. The environment management method for a three-dimensional scene according to claim 5, wherein the generating of corresponding activity-type environment change information for the scene, the application and/or the user based on a position of the object and/or the application within the scene space further comprises:
based on a position of a certain object or a certain application in the scene space, generating environmental change information of an activity position of the object and/or the application within the scene space; and
based on a position of the object in the space scene and a position of the application in the scene space, generating environment change information of an activity distance between the user and the object in the scene and an activity distance between the user and the application.

10. The environment management method for a three-dimensional scene according to claim 5, wherein the generating of corresponding status-type environment change information for the user, the object and/or the application within the scene space based on a current status of the object in the scene space and/or the application further comprises:
based on a current status of a certain object or a certain application in the scene space, obtaining current status information of the certain object or the certain application;
according to the current status information, determining an object in the scene space, a user and an application that are affected; and
generating environment change information of a status change corresponding to the object in the scene space, the user and the application that are affected.

11. An environment management method for a three-dimensional scene, wherein the environment management method is executed by an application side and comprises:
acquiring environmental information that has been subjected to format definition distributed by a system side; and
executing an application logic based on the environmental information that has been subjected to format definition.

12. The environment management method for a three-dimensional scene according to claim 11, wherein the scene comprises at least one of an augmented reality scene, a virtual reality scene or a mixed reality scene.

13. The environment management method for a three-dimensional scene according to claim 11, further comprising:
receiving permission information for other applications and/or scenes sent by the system side, wherein the permission information comprises a read-only permission and a modification permission;
if the permission information is the read-only permission, it is not allowed to modify information of corresponding scenes and/or other applications; and
if the permission information is the modification permission, it is allowed to modify information of scenes and/or other applications.

14. The environment management method for a three-dimensional scene according to any one of claims 11-13, wherein the method further comprises:
acquiring updated environmental information, and executing the application logic,
wherein the updated environmental information is obtained from environmental change information, and the environmental change information is generated based on a change in at least one of a scene, a user and an application or interactions among multiple of the scene, the user and the application, and the user and the application are both located in the scene.

15. The environment management method for a three-dimensional scene according to claim 14, wherein the scene comprises a scene space and an object in the scene space;
the generating of the environmental change information based on a change in at least one of a scene, a user and an application or interactions among multiple of the scene, the user and the application further comprises:
generating corresponding display-type environment change information and/or placement-type environment change information for the scene, the application and/or other users based on the user's operation on the scene and/or the application;
and/or
generating corresponding movement-type environment change information for the scene, the application and/or other users based on a change of a position of the user within the scene and/or between scenes;
and/or
generating corresponding status-type environment change information for the user, the object in the scene space and/or the application based on a current status of the object in the scene space and/or the application;
and/or
generating corresponding activity-type environment change information for the scene, the application and/or the user based on a position of the object in the scene space and/or the application.

16. The environment management method for a three-dimensional scene according to claim 15, wherein the generating of corresponding display-type environmental change information for the scene, the application and/or other users based on the user's operation on the scene and/or the application further comprises:
generating environment change information of displaying or eliminating a corresponding application at a corresponding position in the scene space based on the user's application-binding or application-unbinding operation at a certain position in the scene space;
generating environment change information of a display form of the scene space, the object in the scene space and/or the application based on the user's editing of the scene space, the object in the scene space and/or the application; and
generating environment change information of a display form of the object in the scene space, the application and/or other users based on the user's movement operation in the scene space, combined with the user's position relative to the object in the scene space, the application and/or the other users.

17. The environment management method for a three-dimensional scene according to claim 15, wherein the generating of corresponding placement-type environmental change information for the scene and the application based on the user's operation on the scene and/or the application further comprises:
based on a detection of the user's placement action on the object in the scene space and/or the application, judging a size relationship between a free space at a position of placement and a space required by the object in the scene space and/or the application;
if a size of the free space at the position is smaller than a size of the space required by the object and/or the application in the scene space, generating environmental change information that the object in the scene space and/or the application cannot be placed; and
if the size of the free space at the position is not smaller than the size of the space required by the object and/or the application within the scene space, generating environment change information of placing the object in the scene space and/or the application at the position.

18. The environment management method for a three-dimensional scene according to claim 15, wherein the generating of corresponding movement-type environmental change information for the scene, the application and/or other users based on the user's position change within the scene and/or between scenes further comprises:
based on the user's position change or the user's visual focus in the scene space, generating environment change information of moving the object in the scene space and/or the application.

19. The environment management method for a three-dimensional scene according to claim 15, wherein the generating of corresponding activity-type environmental change information for the scene, the application and/or the user based on a position of the object in the scene space and/or the application further comprises:
based on a position of a certain object or a certain application in the scene space, generating environmental change information for an activity position of the object in the scene space and/or the application; and
based on a position of the object in the space scene and a position of the application in the scene space, generating environmental change information of an activity distance between the user and the object in the scene and an activity distance between the user and the application.

20. The environment management method for a three-dimensional scene according to claim 15, wherein the generating of corresponding status-type environmental change information for the user, the object in the scene space and/or the application based on a current status of the object in the scene space and/or the application further comprises:
based on a current status of a certain object or a certain application in the scene space, obtaining current status information of the certain object or the certain application;
according to the current status information, determining an object in the scene space, a user and an application that are affected; and
generating environmental change information of a status change corresponding to the object in the scene space, the user and the application that are affected.
